Europäisches Patentamt

European Patent Office

Office européen des brevets

(11) Numéro de publication: **0 102 862**
**A1**

# (12) DEMANDE DE BREVET EUROPEEN

(21) Numéro de dépôt: 83401442.5

(22) Date de dépôt: 12.07.83

(51) Int. Cl.³: **E 04 G 1/20**
**E 04 G 1/02**

(30) Priorité: 15.07.82 FR 8212342
11.07.83 FR 8311500

(43) Date de publication de la demande:
14.03.84 Bulletin 84/11

(84) Etats contractants désignés:
AT BE CH DE GB IT LI LU NL SE

(71) Demandeur: Koehl, Jean-Marie Gérard René
3, rue Varengue
F-92340 Bourg la Reine(FR)

(72) Inventeur: Koehl, Jean-Marie Gérard René
3, rue Varengue
F-92340 Bourg la Reine(FR)

(74) Mandataire: Madeuf, René Louis et al,
Cabinet Madeuf 3, Avenue Bugeaud
F-75116 Paris(FR)

(54) Echafaudage de maçon à tréteaux élévateurs convoyeurs.

(57) L'échafaudage de maçon comporte un plan de travail (4), recevant les matériaux tels que du mortier, et des tréteaux du type élévateur à hauteur réglable supportant au moins un transporteur ou rampe à rouleaux (14) situé derrière le maçon.

Fig.2

EP 0 102 862 A1

Croydon Printing Company Ltd.

## Echaufaudage de maçon à tréteaux élévateurs convoyeurs.

L'utilisation de transporteurs à rouleaux est d'un usage courant dans toutes sortes d'industries, notamment dans le bâtiment.

On a déjà utilisé des rampes transporteuses suspendues à des potences placées à l'extérieur d'un bâtiment, la rampe étant disposée d'un côté du mur, et le maçon de l'autre côté. Une telle disposition est certes pratique pour le maçon mais il est alors nécessaire de prévoir deux installations, l'une pour la rampe disposée à l'extérieur, l'autre à l'intérieur qui constitue l'échafaudage du maçon. A partir d'un certain niveau, la rampe extérieure est très difficile à monter. En outre, le stockage des matériaux doit se faire à l'extérieur, ce qui n'est pas toujours possible, de nombreux chantiers ayant des abords non plats ou inaccessibles.

Dans le cas ci-dessus, le maçon est approvisionné par l'avant avec une organisation de chantier tout à fait particulière et non habituelle.

La présente invention résout le problème exposé ci-dessus avec une disposition plus proche des habitudes des maçons et de l'organisation des chantiers. En effet, dans la majorité des cas, le maçon est non pas approvisionné par l'avant comme ci-dessus mais il reçoit son matériel par l'arrière, c'est-à-dire que les matériaux préparés par le manoeuvre arrivent derrière le maçon, l'aide-maçon devant alors beaucoup se déplacer pour poser les matériaux, ce qui lui occasionne une grande fatigue. Lorsque le maçon s'élève en hauteur, tous les matériaux sont approvisionnés derrière lui sur un tréteau. Ainsi, aussi bien quand le maçon travaille au sol que lorsqu'il travaille sur un tréteau, il est obligé de se baisser pour ramasser les matériaux, ce qui nécessite un effort considérable de sa part.

Il est donc préférable, conformément à l'invention, d'amener les matériaux toujours à la hauteur de la hanche du maçon en ne laissant à ce dernier qu'une simple rotation de corps à effectuer. Le plan de réception doit être lié au plan de marche de manière constante et le maçon est élevé de façon progressive et de manière connue en soi jusqu'au poste de travail, notamment par des systèmes à crémaillères ou à treuils. Dès le début du soulèvement du maçon, des sécurités tant frontales qu'arrière doivent être assurées.

L'invention permet également d'éviter une fatigue excessive pour le manoeuvre.

Les tréteaux élévateurs convoyeurs selon l'invention constituent un poste de travail simple et bien adapté au travail du maçon. Les tréteaux portent des rampes à rouleaux permettant de faire se déplacer tout au long du mur en construction et à une hauteur constante et confortable pour le maçon les blocs ou parpaings poussés par le manoeuvre, les tréteaux élevant progressivement le maçon et son plan de travail tout en assurant sa sécurité frontale et arrière à une hauteur de travail toujours confortable par rapport au mur à construire et permettant à l'aide-maçon, par un escalier escamotable, de s'élever lui-même en vue d'un approvisionnement aisé de la rampe à rouleaux.

L'échafaudage de maçon conforme à l'invention est caractérisé en ce qu'il comporte un plan de travail recevant les matériaux tels que le mortier et des tréteaux du type

3

élévateur supportant au moins un transporteur ou rampe
à rouleaux situé derrière le maçon et parallèle au mur
à construire.

Diverses autres caractéristiques de l'invention ressortent d'ailleurs de la description détaillée qui suit.

Des formes de réalisation de l'objet de l'invention
sont représentées, à titre d'exemples non limitatifs,
aux dessins annexés.

La fig. 1 montre l'ensemble de l'échafaudage et du processus de travail avec le manoeuvre qui pousse les blocs
sur une rampe à rouleaux jusqu'au poste de travail.

La fig. 2 montre des détails du tréteau élévateur convoyeur illustré à la fig. 1.

La fig. 3 représente un détail de la rampe à rouleaux
des figures précédentes.

Les fig. 4 et 5 montrent une variante du tréteau élévateur dans un échafaudage où le bloc passe sur une rampe
à rouleaux entre les montants et les barreaux d'une
échelle.

La fig. 6 montre des montants renforcés chargés de blocs
et fixés à des structures légères, la distribution
horizontale étant assurée par des transporteurs à rouleaux.

La fig. 7 montre notamment une rampe à rouleaux supplémentaire prévue pour le transport d'une brique vers
le poste de travail.

La fig. 8 illustre une variante de la fig. 2 à potence

4

de transport.

La fig. 9 montre une autre variante dans laquelle le bloc est suspendu à un bras articulé.

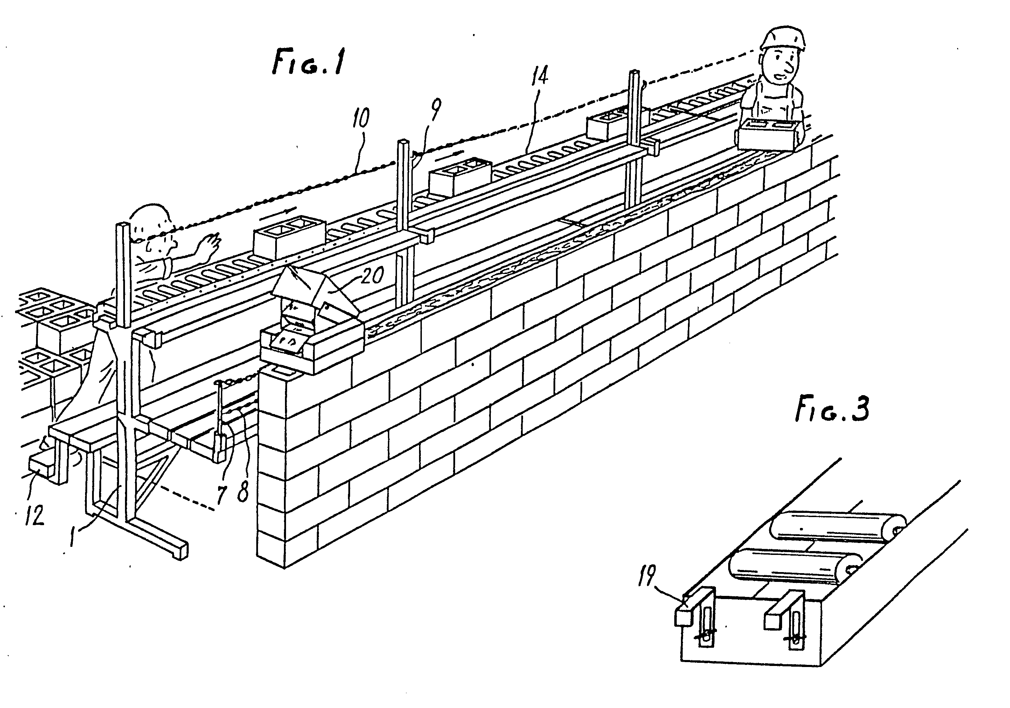

Les fig. 1 à 3 illustrent l'ensemble de l'échafaudage dans une première forme de réalisation de l'invention, et on a représenté à gauche de la fig. 1 le manoeuvre poussant un bloc ou parpaing sur un transporteur ou rampe à rouleaux jusqu'à l'endroit où le maçon en a besoin.

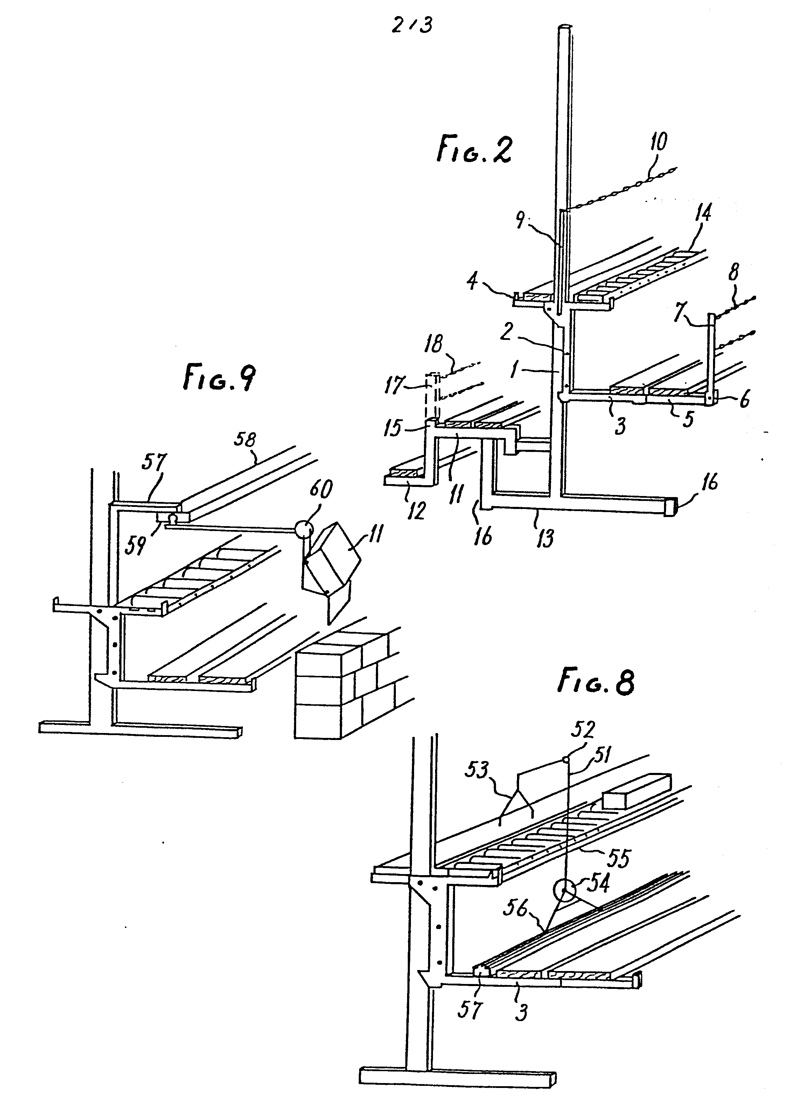

Comme on le voit bien à la fig. 2, le tréteau élévateur convoyeur conforme à l'invention comprend un montant cranté 1 pour le support d'une partie mobile 2 portant la plate-forme 3 de déplacement du maçon et la plate-forme 4 de réception des matériaux, la plate-forme 3 du maçon étant prolongée par un bras d'extension 5. Un carré 6 de réception de sécurité frontale côté mur reçoit un montant 7 de garde-corps amovible portant des lisses horizontales ou chaîne 8. Un montant vertical 9 est fixé sur la partie mobile 2 pour recevoir une chaîne 10 assurant une sécurité en hauteur du maçon contre des chutes vers l'arrière. Un marche-pied escamotable 11, présentant une marche d'accès repliable 12 et des pieds d'appui 13 au sol, est prévu pour le manoeuvre ou aide du maçon.

Des rampes à rouleaux 14 sont montées sur la plate-forme 4 pour assurer le déplacement horizontal des blocs. On utilise au minimum une rampe unique doublée d'une petite plate-forme en planches pour la réception des matériaux, ou encore deux rampes parallèles semblables. Dans le dernier cas, les blocs circulent sur une des rampes tandis que les bacs à mortier circulent sur l'autre rampe.

La rampe 14 et le plan de travail ou plate-forme 4 qui sont sur le même niveau se trouvent à hauteur de hanche pour le maçon se déplaçant sur le plancher de marche ou plate-forme 3.

Un tube 15 est prévu pour recevoir un montant de garde-corps amovible 17 lorsque le marche-pied 12 est en extension et utilisé en tant que plate-forme pour la réalisation d'un garde-corps en longueur, les montants 17 recevant des lisses horizontales ou chaînes 18 de protection. Un tube de réception 16 est, en outre, prévu pour le montage de pieds à vis réglables pour sol inégal, ou des roulettes permettant de déplacer des ensembles complets de deux montants solidarisés.

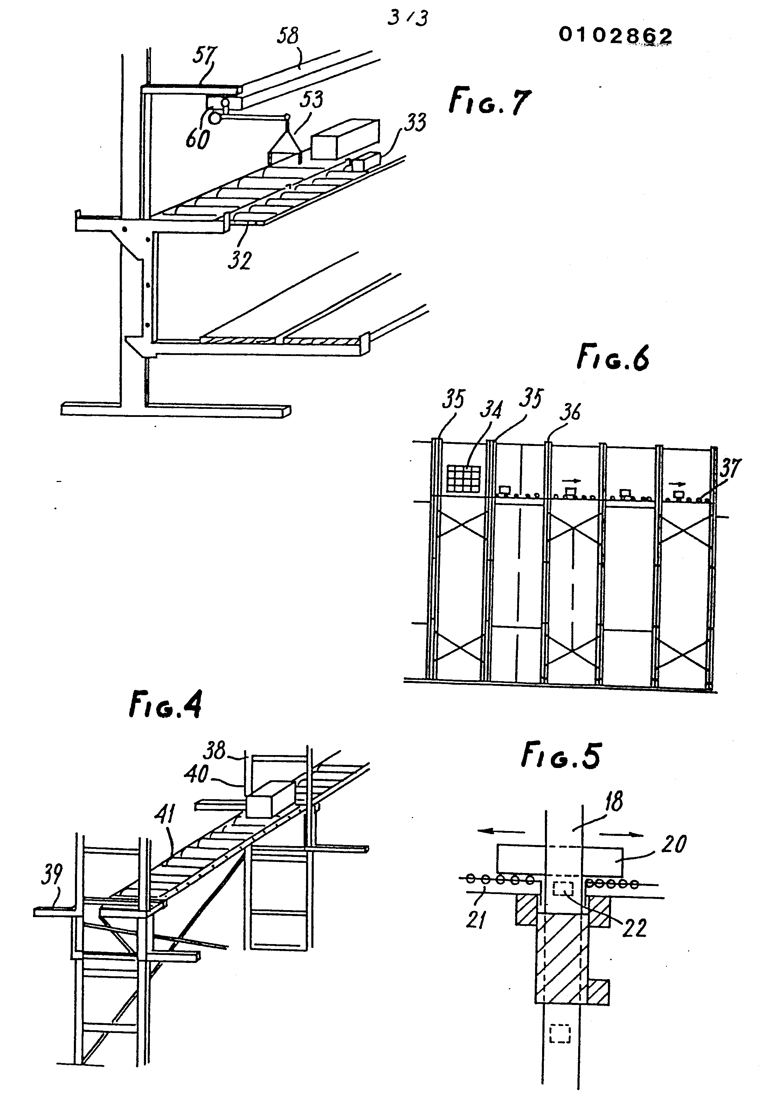

La fig. 3 montre un détail du transporteur ou rampe à rouleaux 14 et illustre le réglage en hauteur de pattes d'accrochage 19 prévues pour assurer une moindre fatigue au maçon.

Bien que cela ne soit pas indispensable et pour éviter encore au maçon de se fatiguer, ce dernier peut utiliser la machine représentée en 20, permettant d'étaler le mortier sur les blocs déjà posés par un simple déplacement de cette machine qui peut d'ailleurs éventuellement être commandée par un moteur.

On indique, ci-après, le processus de travail pour le montage d'un mur.

Dans une première phase, la partie mobile 2 permet d'amener le bras d'extension 5 au ras du sol, le bras étant alors rentré pour dégager la place au maçon et lui permettre de marcher entre le tréteau et le mur. La plate-forme de réception 4 portant les rampes à rouleaux 14 se trouve alors à la hauteur de la hanche du maçon. Le marche-pied 11 est rentré et la marche d'accès 12 est repliée. L'aide du maçon peut donc facilement accéder à la rampe 14 sur laquelle il dépose les blocs ou parpaings en les faisant rouler, sans effort, vers le point du mur où le maçon en a besoin.

Dans une deuxième phase, dès que le mur a atteint une certaine hauteur, le maçon prépare la plate-forme de marche 5, met en place les sécurités frontales 7 et 8 ainsi que les sécurités arrière 10 et soulève la partie mobile 2 de la hauteur d'un ou de deux blocs. Pendant plusieurs rangs, l'aide-maçon pourra approvisionner le maçon sans difficulté en faisant rouler les blocs sur la rampe à rouleaux 14.

Dans une troisième phase, l'aide-maçon amène vers lui le marche-pied 11 et rabat la marche d'accès 12, ce qui lui permet de s'élever lui-même pour accéder à la rampe à rouleaux 14 lorsque celle-ci aura été mise en position haute (fig. 1).

Le mode de réalisation ci-dessus est quelque peu compliqué et sophistiqué. Des réalisations plus simples comprenant des rampes simplements posées ou suspendues sur des tréteaux de type classique à planches, ou encore montées entre ou à côté de tels tréteaux, restent dans le cadre de la présente invention permettant d'approvisionner le maçon par l'arrière à l'aide de rampes à rouleaux.

Lorsque le tréteau élévateur est utilisé en grande hauteur, l'emplacement des rampes distributrices à rouleaux 14 a une influence sur la résistance et le poids des éléments de l'échafaudage. Une solution pour résoudre ce problème consiste à disposer les rampes au centre de gravité d'échelles remplaçant le montant cranté 1 des figures précédentes, et de part et d'autre de l'échelle, le bloc passant entre les montants et les barreaux de l'échelle.

Au dessin, les fig. 4 et 5 montrent des échelles 38 sur lesquelles sont montées des parties mobiles 39, un bloc 40 étant amené à passer entre le montant et les barreaux de l'échelle sur des rampes 41 semblables aux rampes 14 des fig. 1 à 3. La bonne répartition des charges obtenue par la réalisation selon les fig. 4 et 5 permet de construire du matériel plus léger manoeuvrable à la main. Il suffit alors de prévoir un appareil de manutention des matériaux ou un dispositif analogue placé à un endroit de la chaîne de distribution. Cette construction fournit alors une rigidité accrue qui permet l'utilisation du dispositif selon l'invention pour tous les travaux de maçonnerie, à toutes les hauteurs, en permettant à tout moment l'approvisionnement du maçon à hauteur de hanche et son travail à hauteur de mur.

La fig. 6 montre une réalisation dans laquelle on utilise des montants renforcés 35 pour charger un ensemble de blocs 34 relié à des montants de structure légère 36, la distribution et répartition horizontales des blocs étant assurée par des rouleaux 37.

On sait que dans certains pays les bâtiments sont construits avec deux types de matériaux, à savoir le bloc et la brique. Une des réalisations avantageuses de l'invention consiste à ajouter à la rampe à blocs unique (ou à la rampe à blocs associée à une rampe à mortier) des figures précédentes, une rampe spécialement prévue pour la brique et à roulage indépendant des autres rampes. La rampe à brique est soit dans le même plan horizontal, de préférence côté mur, soit dans d'autres plans permettant un approvisionnement simultané en briques et en blocs. On peut également prévoir une rampe à doubles rouleaux sur un même axe correspondant au même besoin, en permettant de faire rouler les briques, et les blocs indépendamment les uns des autres.

La fig. 7 montre ainsi une deuxième petite rampe à rouleaux 32 sur laquelle se déplace une brique 33.

Le convoyage des blocs par transporteur prend en compte le transport horizontal, tandis que l'élévation progressive des plans horizontaux par l'échafaudage prend en compte la position confortable du maçon. Toutefois, dans ce qui précède, la pose des blocs doit toujours être faite manuellement.

Une des manières avantageuses selon l'invention de parfaire l'acheminement des blocs jusque sur le mur à partir du transporteur à rouleaux est de faire déplacer un appareil de préhension parallèlement à la rampe à rouleaux et indépendamment de la rampe, ou partiellement ou totalement dépendant de la rampe, cet appareil de préhension étant par exemple électrique.

La fig. 8 montre une potence 51, articulée en 52, avec une pince 53 au bout du bras, et se guidant d'une part, à titre d'exemple, le long d'une rampe 55 et dans ou sur un rail 56 prévu sur le plancher 3.

Les fig. 7 et 9 montrent une autre version suspendue. Le bras 57 fait partie d'un chariot mobile de support de guides 58 dans lesquels coulisse un bras articulé 59 rotatif sur 360° dans le plan horizontal et supportant en 60 soit un moteur, soit un équilibreur. Le bras 57 peut être terminé par une pince à bloc ou par un dispositif

9

0102862

d'accrochage permettant d'étaler le mortier sur le mur
à l'aide d'une  machine connue en soi. La translation
horizontale de l'ensemble peut être assurée par poussée
humaine ou par un groupe moteur illustré en 54 à la fig. 8.

Revendications

1 - Echafaudage de maçon, caractérisé en ce qu'il comporte un plan de travail (4), recevant les matériaux tels que du mortier, et des tréteaux du type élévateur à hauteur réglable supportant au moins un transporteur ou rampe à rouleaux (14) situé derrière le maçon et parallèle au mur à construire.

2 - Echafaudage de maçon selon la revendication 1, caractérisé en ce que la rampe (14) et le plan de travail (4) sont séparés.

3 - Echafaudage de maçon selon la revendication 1, caractérisé en ce que la rampe (14) et le plan de travail (4) sont réunis dans le même échafaudage.

4 - Echafaudage de maçon selon la revendication 1, caractérisé en ce que la rampe (14) et le plan de travail (4) sont sur un même niveau et se trouvent à hauteur de hanche par rapport à un plancher de marche ou plate-forme (3).

5 - Echafaudage de maçon selon l'une des revendications 1 ou 4, caractérisé en ce que la rampe (14), le plan de travail (4) et le plan de marche ou plate-forme (3) sont solidaires et maintenus à une distance constante en étant positionnés verticalement de manière réglable le long d'un mât ou montant (1).

6 - Echafaudage de maçon selon la revendication 5, caractérisé en ce qu'il comprend une protection frontale (7) amovible.

7 - Echafaudage de maçon selon la revendication 5, caractérisé par un dispositif vertical (9) fixé sur une partie mobile (2) montée sur le mât (1) pour le support d'une protection horizontale (10).

8 - Echafaudage de maçon selon la revendication 1, caractérisé en ce qu'un marche-pied escamotable (11) à marche d'accès repliable (12) est monté à l'arrière du tréteau pour faciliter l'accès à l'aide-maçon.

9 - Echafaudage de maçon selon la revendication 1, caractérisé en ce que le plan de travail (4) est lui aussi une rampe à rouleaux faisant circuler les bacs à mortier.

10 - Echafaudage de maçon selon la revendication 1, caractérisé en ce que les tréteaux du type élévateur à hauteur réglable sont constitués de montants à échelle (38) et de rampes à rouleaux (41) placées de part et d'autre de l'échelle.

11 - Echafaudage de maçon selon la revendication 1, caractérisé en ce que les tréteaux du type élévateur comportent une distribution indépendante (32) pour briques (33).

12 - Echafaudage de maçon selon la revendication 1, caractérisé en ce que les tréteaux du type élévateur comportent un appareillage de préhension à translation horizontale (fig. 7, 8, 9).

13 - Echafaudage de maçon selon la revendication 12, caractérisé en ce que l'appareil de préhension comprend des moyens en vue de mouvements motorisés (50, 54).

14 - Echafaudage de maçon selon la revendication 13, caractérisé en ce que le mouvement vertical de l'appareil de préhension est assuré par un équilibreur (60).

15 - Echafaudage de maçon selon la revendication 1, caractérisé en ce que les tréteaux de type élévateur comprennent au moins un élément vertical (35) dimensionné pour les charges lourdes, les autres éléments verticaux (36) étant des structures légères.

16 - Echafaudage de maçon selon la revendication 1, caractérisé en ce que des roulettes fixées sur les pieds permettent le déplacement d'ensembles complets de deux montants solidarisés.

Fig. 1

Fig. 3

0102862

2/3

**Fig.2**

**Fig.9**

**Fig.8**

**FIG. 7**

**FIG. 6**

**FIG. 4**

**FIG. 5**

**Office européen des brevets**

# RAPPORT DE RECHERCHE EUROPEENNE

Numéro de la demande

EP 83 40 1442

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | GB-A- 145 286 (A. ANDRE) * Figures 1-3; revendications 1, 2; page 1, ligne 54 - page 2, ligne 7 * & FR - A - 502259 | 1 | E 04 G 1/20<br>E 04 G 1/02 |
| A | DE-C- 494 148 (O. NÄCKER et al.) * Figures 1, 2; page 1, lignes 26-66 * | 1 | |
| A | GB-A-1 579 240 (E.N. WEIGHTMAN) * Document complet * | 2,6,7 | |

|  |
|---|
| **DOMAINES TECHNIQUES RECHERCHES (Int. Cl. ³)** |
| B 65 G 13/00<br>E 04 G 1/00<br>E 04 G 21/00 |

Le présent rapport de recherche a été établi pour toutes les revendications

| Lieu de la recherche | Date d'achèvement de la recherche | Examinateur |
|---|---|---|
| BERLIN | 12-10-1983 | VON WITTKEN-JUNGNIK |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82